# EUROPEAN PATENT APPLICATION

(11) **EP 1 767 830 A1**
(43) Date of publication of application: **28.03.2007**
(21) Application number: 06121066.2
(22) Date of filing: 21.09.2006
(51) Int. Cl.: F16H 61/32, F16H 59/10, F16H 61/24

(54) **Operating position select device adapted for automatic transmission**

(30) Priority: 21.09.2005 JP 2005273023
(71) Applicant: Calsonic Kansei Corporation, Tokyo 164-8602 (JP)
(72) Inventor: Nagano, Masaharu c/o Calsonic Kansai Corp., Tokyo 164-8602 (JP); Kobayashi, Shinya c/o Calsonic Kansai Corp., Tokyo 164-8602 (JP); Osamura, Kensuke c/o Calsonic Kansai Corp., Tokyo 164-8602 (JP)
(74) Representative: Intes, Didier Gérard André

(57) **Abstract**

An operating position select device (100) has a first connecting member (13) connected with a select lever (11), a mode shift unit (500) for shifting operation modes of an automatic transmission (5), a second connecting member (17) connected with the mode shift unit (500), the second connecting member(17) having a relative movable mechanism (171, 131, 32a, 32b; 8c, 8d) for allowing a limited movement relative to the first connecting member (13) and an assist actuator (2; 97), position sensing means (61, 62) sensing at least two positions among an operating position, an actuation position and their relative position, and a control unit (3) controlling the actuator (2; 97) based on the relative position. The control unit (3) has assist force suppressing means for suppressing the assist force when an assist control of the actuator (2; 97) is started based on a relative position variation due to a variation of the actuation position.

## Description

The present invention relates to an operating position select device adapted for an automatic transmission by which a driver can select one of select mode positions corresponding to a plurality of operation modes of the automatic transmission by operating a select lever.

An operating position select device adapted for an automatic transmission of this kind is disclosed in Japanese patent laying-open publication No. (Tokkaihei) 09 - 323559. This select device includes a select lever unit disposed near a driver's seat in a passenger compartment and a mode shift unit mounted on an automatic transmission. The select lever unit has a select lever manually operated by a driver, and is connected with the mode shift unit by a connecting mechanism, such as a control cable, or a connecting linkage, which transmits an operating force applied on the select lever by the driver to the mode shift unit to shift operation modes of the automatic transmission.

The conventional select device, however, has a problem in that the select lever unit needs a long select lever in order to operate it without a large operating force of the driver, which reduces design freedom concerning an installation location of the select lever unit and/or a layout of a passenger compartment.

This reason being that a length of the select lever is determined so that a driver can easily operate the select lever and its operating torque must overcome frictional resistance of the connecting mechanism and the like. Namely, the operating torque, generated by the operating force acting on the select lever, has to be larger than torque caused by the sum of the frictional resistance in the connecting mechanism and resistance generated when a detent pin, which moves with the select lever, gets over a cam top portion of a detent plate during select operation, although the operating force of the driver is limited to a certain extent. Accordingly, in order to satisfy both of the above requirements, the select lever needs to be longer than a certain length, typically to be 350 mm.

Another operating position select device adapted for an automatic transmission of this kind is disclosed in Japanese patent laying-open publication No. (Tokkai) 2003 - 97694. This select device is, what is called, a shift-by-wire type one. It has a select lever manually operatable by a driver, a select position detector for detecting a current position of the select lever, a mode shift unit mounted on an automatic transmission for shifting its operation modes, an electric motor for driving a mode shift unit, and a control unit for controlling the electric motor based on an output signal from the detector.

This conventional select device is suitable for shortening a length of the select lever and expanding design freedom for its installation location and/or layout of a passenger compartment, while the select device lacks a mechanical connection between the select lever and the mode shift unit. However, this lack of the mechanical connection results in a problem in that the mode shift unit can not be shifted despite operating the select lever in case of electrical failure such that an electric wire is broken, or the select position detector or the control unit fails.

It is, therefore, an object of the present invention to provide an operating position select device for an automatic transmission which overcomes the foregoing drawbacks and can expand design freedom concerning layout of a passenger compartment and/or an installation location of a select lever unit, and drive a mode shift unit despite of electric failure of the operating position select device, decreasing operating force and suppressing hunting between a start and an end of assist control to provide an on-demand favorable select-lever operating feeling in a select operation.

According to an aspect of the present invention there is provided an operating position select device adapted for an automatic transmission whose operation modes are shiftable, the operating position select device including a select lever unit having a select lever that is operated by a driver between a plurality of select positions corresponding to the operation modes, a first connecting member mechanically connected with and movable together with the select lever, a mode shift unit mounted on the automatic transmission for shifting operation modes of the automatic transmission, a second connecting member mechanically connected with the mode shift unit for shifting positions thereof, the second connecting member being provided with a relative movable mechanism which allows the first connecting member to move relative to the second connecting member in non-contact therewith within a limit amount and restrain the second connecting member to move together with the first connecting member when the first and second connecting members contact with each other after a relative movement thereof, position sensing means sensing at least two positions among an operating position of the first connecting member, an actuation position of the second connecting member, and a relative position between the operating position and the actuation position, an assist actuator for supplying assist force to the second connecting member; and a control unit for controlling motor drive current to be applied to the assist actuator based on the relative position to vary the assist force. The control unit has assist force suppressing means for suppressing the assist force when an assist control of the assist actuator is started based on a relative position variation due to a variation of the actuation position.

Therefore, the operating position select device of the present invention can expand design freedom concerning layout of a passenger compartment and/or an installation location of the select lever unit, and drive the mode shift unit despite electric failure of the operating position select device, decreasing operating force and suppressing hunting between the start and an end of the assist control to provide an on-demand favorable select-lever operating feeling in the select operation.

Preferably, the assist force suppressing means suppresses the assist force by shifting a gain in an intermediate position start mode to be smaller than a gain in a normal start mode used in a start of the assist control based on the relative position variation due to a variation of the operating position.

Therefore, suppressing the assist force can be carried out easily and at low manufacturing costs.

Preferably, the assist force suppressing means suppresses the assist force by decreasing the relative position.

Therefore, suppressing the assist force can be carried out easily and at low manufacturing costs.

Preferably, the assist force suppressing means suppresses the assist force by changing a command motor drive current signal obtained based on the relative position and determining the motor drive current.

Therefore, suppressing the assist force can be carried out easily and at low manufacturing costs.

Preferably, the control unit shifts the assist control from in the intermediate position start mode to in the normal start mode when the operating position changes to cause the start of the assist control in the intermediate position start mode.

Therefore, hunting between the start and the end of the assist control can be suppressed easily and at low manufacturing costs.

The objects, features and advantages of the present invention will become apparent as the description proceeds when taken in conjunction with the accompanying drawings, in which:
FIG 1 is a schematic diagram showing a structure of an automatic transmission with an operating position select device of a first embodiment according to the present invention;
FIG. 2 is an enlarged perspective view showing a select lever unit and an assist actuator which are used in the operating position select device shown in FIG 1;
FIG. 3 is an enlarged perspective view showing a mode shift unit with a detent mechanism, which is used in the operating position select device shown in FIG. 1;
FIG. 4 is a control block diagram of a control unit and its peripheral equipment that are used in the operating position select device shown in FIG. 1;
FIG 5 is a flowchart of assist control process executed in the control unit shown in FIG. 4 for controlling the assist actuator during a select operation;
FIG. 6 is a basic target reaction-force table used in the assist process and having a characteristic diagram showing relationships of operating reaction force acting on a select lever and a cam profile of the detent mechanism with respect to an operating angle of the select lever, when the select lever is shifted from a P position to an R position without assist force of the assist actuator;
FIG. 7 is a time chart of relationships between an operating angle, an actuation angle, and an actual relative angle between them when the select lever is shifted from the P position to the R position;
FIGS. 8A to 8D are schematic diagrams showing successive states of the select lever and a manual plate lever of the mode shift unit in a select operation, FIG 8A is the diagram showing a state where the select lever is not operated, FIG. 8B is the diagram showing a state where the select lever is being moved at normal speed, FIG. 8C is the diagram showing a state where the select operation is ended, and FIG. 8D is the diagram showing a state where the select lever is being moved at rapid speed or on a slope;
FIG. 9 is a flowchart of an operating mode judging process and the assist process executed by the control unit;

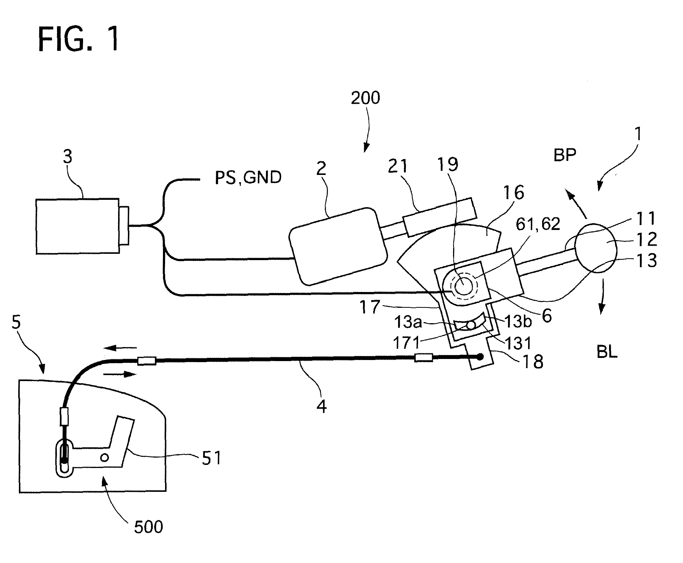

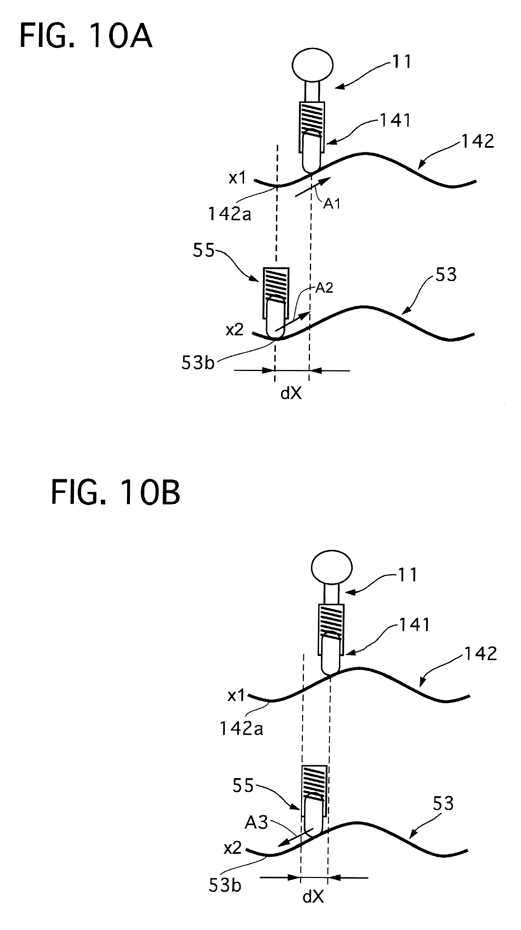

FIG. 10A and FIG. 10B are schematic diagrams showing states of a check pin of checking mechanism and a detent pin of a detent mechanism used in the operating position select device shown in FIGS. 1 to 3, FIG. 10A is the diagram showing a state where the detent pin follows the check pin by the assist control executed by the assist control executed based on a displacement angle variation while the select operation is being moved, and FIG 10B is the diagram showing a state where the detent pin is moved back by the assist control executed due to an actuation angle variation when the check pin is held between a bottom portion and a top portion of a check plate of the checking mechanism after the assist control executed due to an operating angle is ended;
FIG. 11 is a control block diagram of a control unit and its peripheral equipment that are used in an operating position select device of a second embodiment according to the present invention;
FIG 12 is a control block diagram of a control unit and its peripheral equipment that are used in an operating position select device of a third embodiment according to the present invention;
FIG. 13 is a schematic diagram showing a structure of an automatic transmission with an operating position select device of a fourth embodiment according to the present invention;
FIG. 14 is a schematic diagram showing a structure of an automatic transmission with an operating position select device of a fifth embodiment according to the present invention; and
FIG. 15 is a perspective view showing an assist actuator used in the operating position select device shown in FIG. 14.

Throughout the following detailed description, similar reference characters and numbers refer to similar elements in all figures of the drawings, and their descriptions are omitted for eliminating duplication.

An operating position select device of a first preferred embodiment according to the present invention will be described with reference to the accompanying drawings.

Referring to FIG. 1, there is shown an automatic transmission 5 and an operating position select device 1 for controlling the transmission 5.

The automatic transmission 5 is a conventional multi-speed transmission with a plurality of planetary gear sets, not shown, and is shiftable among a plurality of operation modes, for example, a parking mode, a reverse drive mode, a neutral mode, a forward drive mode, and a forward low gear drive mode.

The automatic transmission 5 is mechanically connectable with the operating position select device 1, which is capable of shifting the operation modes to a desired operation mode by manually selecting a select lever 11 of the select device 1.

The operating position select device 1 includes the select lever unit 100 manually operated by a driver, a mode shift unit 500 mounted on the automatic transmission 5, a control cable 4 for transmitting operating force between the select lever 11 and the mode shift unit 500, an assist actuator 200 for assisting a select operation of the select lever 11, and a control unit 3 for controlling the assist actuator 200.

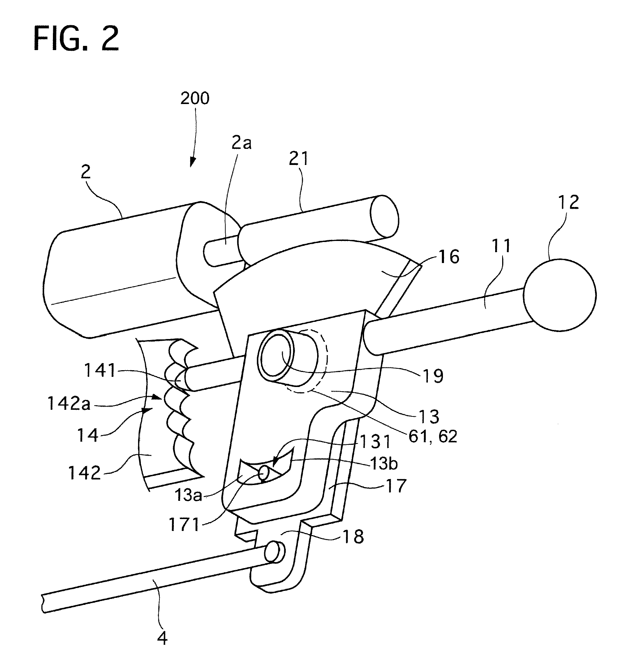

The select lever unit 100 is arranged on an instrumental panel or the like within arm's reach of the driver. As shown in FIG. 2, the select lever unit 100 is equipped with the select lever 11 operatable by the driver and a checking mechanism 14 for providing click feeling to a driver during a shift operation. The select lever unit 100 has a not-shown gate mechanism for keeping the select lever 11 in a selected position and preventing a wrong shift operation.

The lever 11 is swingably supported by a supporting shaft 19 supported on a not-shown support plate fixed to a vehicle body side, and on its top portion, a knob 12 is mounted for grip of a hand of the driver.

The select lever 11 is set to be approximately 100 mm in length in this embodiment, shorter by approximately 250 mm than a conventional type select lever. The lever 11 is movable by the driver swingably in a first direction toward a P position as indicated by an arrow BP in FIG. 1 and in a second direction, opposite to the first direction, toward an L position as indicated by an arrow BL.

The operation modes of the automatic transmission 5 can be shifted by moving the select lever 11 in one of select positions: the P position corresponding to the parking mode of the automatic transmission 5, an R position corresponding to the reverse drive mode, an N position corresponding to the neutral mode, a D position corresponding to the forward drive mode, and the L position corresponding to the forward low geared drive mode.

As shown in FIG. 2, the select lever 11 is integrally fixed to a first connecting member 13 at its intermediate portion. The first connecting member 13 is swingably rotatable around the supporting shaft 19 and formed with a play opening 131 shaped like an arc. This play opening 131 is formed, being centered on the supporting shaft 19.

The shaft 19 also swingably supports a second connecting member 17, which is lapped over the first connecting member 13. The second connecting member 17 is provided with a worm wheel portion 16 at its top end portion and an attachment portion 18 at its bottom end portion. The worm wheel portion 16 is in mesh with a worm 21 fixed on an output shaft 2a of an electric motor 2 of the assist actuator 200, and the attachment portion 18 is connected with an one end portion of the control cable 4.

The second connecting member 17 is further provided at its intermediate portion with a projection 171 inserted in the play opening 131 of the first connecting member 13 so that the projection 171 can move relative to the play opening 131 in a limited travel range, where the projection 171 can move between a wall portion 13a and a wall portion 13b which form the play opening 131. In other words, the first and second connecting members 13 and 17 can move independently from each other in the limited travel range, while they move integrally with each other out of the range, the projection 171 contacting with the wall portion 13a or 13b. The wall portions 31a and 31b of the play opening 131 and the projection 171 act as a relative movable mechanism of the present invention.

A select-lever side checking mechanism 14 has a check plate 142 in a wave shape with five bottom portions 142a, which are formed corresponding to the select mode positions P, R, N, D, and L. The check plate 142 is fixed to the vehicle body side and pressed by a check pin 141, which is extractable from and retractable into a not-shown hole formed in the first connecting member 13, being urged by a not-shown spring arranged in the hole. The engagement of the check pin 141 and the bottom portion 142a corresponding to a selected mode position keeps the select lever 11 being positioned in the selected mode position, regardless of vibration force transmitted from the vehicle body and others.

The assist actuator 200, as shown in FIGS. 1 and 2, includes the electric motor 2 with reduction gears for reducing rotation speed of the output shaft 2a of the motor 2, the worm 21 formed on the outer peripheral surface of the output shaft 2a and meshing with worm wheel 16. The electric motor 2 is controlled by the control unit 3 so as to apply assist force to the second connecting member 17 or rest.

As shown in FIG. 1, at the supporting shaft 19, there are provided a first position sensor 61 for detecting an operating angle of the first connecting member 13 connected with the select lever 11 and a second position sensor 62 for detecting an assist angle of the second connecting member 17 connected with the mode shift unit 500. The first position sensor 61 and the second position sensor 62 act as a position sensing means of the present invention. The operating angle x1 corresponds to an operating position of the present invention, and the actuation angle x2 corresponds to an actuation position of the present invention.

The first position sensor 61 detects an operating angle based on a relative angle between the first connecting member 13 and the support plate, and then outputs a first position signal to the control unit 3. The second position sensor 62 detects an actuation angle based on a relative angle between the second connecting member 17 and the support plate, and then outputs a second position signal to the control unit 3.

The operating angle of the first connecting member 13 is substantially equal to that of the select lever 11, since they are joined with each other. Similarly, the actuation angle of the second connecting member 17 is substantially equal to that of the mode shift unit 500, since they are joined with each other.

By using the first position sensor 61 and the second position sensor 62, a relative angle between the first and second connecting members 13 and 17 can be obtained by subtraction between the operating angle and the actuation angle.

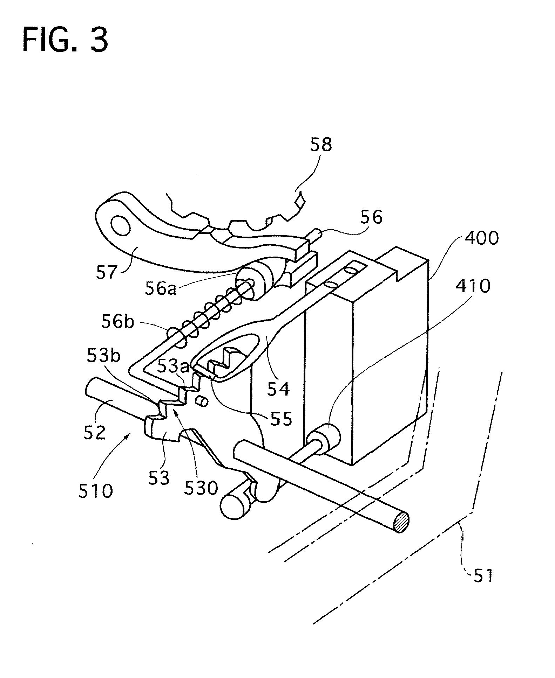

The mode shift unit 500 is constructed to shift the operation modes of the automatic transmission 5 according to an operation of the select lever 11. Referring to FIGS. 1 and 3 of the drawings, the mode shift unit 500 has a manual plate lever 51 and a transmission-side detent mechanism 510 for keeping the manual plate lever 51 in a position selected by the select lever 11.

The manual plate lever 51 is integrally fixed at its intermediate portion with a rotary shaft 52, and connected with the other end portion of the control cable 4 at its one end portion, so that the second connecting member 17 can rotate the rotary shaft 52 relative to a transmission case of the transmission 5 through the control cable 4 according to a select operation of the select lever 11. Incidentally, the rotary shaft 52 is integrally fixed to a detent plate 53 of the detent mechanism 510, so that they rotate together with each other.

The detent mechanism 510 includes the detent plate 53 having a cam 530 on its top portion, a detent pin 55 pressed onto the cam 530, and a spring plate 54 acting its spring force on the pin 55.

The detent plate 53 is mechanically connected at its bottom portion with a valve spool 410 of a not-shown manual valve disposed in a control valve unit 400 of the automatic transmission 5 so as to move the valve spool 410 according to a selected position. The detent plate 53 is formed on its upper portion with the cam 530 having six top portions 53a and five bottom portions 53b. Each bottom portion 53b is arranged between the adjacent top portions 53a and corresponds with one of the five operation modes of the automatic transmission 5.

The cam 530 is pressed by the detent pin 55 that is urged by the spring plate 54. The spring plate 54 is mounted at its one end portion on the control valve unit 400 and supports the detent pin 55 at its other end portion. The engagement of the detent pin 55 and the selected bottom portion 53b keeps the detent plate 53 being positioned by, thereby detaining the valve spool 410 in the correspondent position.

The detent plate 53 is also coupled at its cam side portion with a parking rod 56 having a wedge 56a. The wedge 56a is mounted on and movable along the rod 56, and formed with a tapered surface to press a parking pawl 57 toward a parking wheel 58 united with an output shaft of the automatic transmission 5 when the wedge 56a advances. The wedge 56a is biased by a coil spring 56b so that it can advance to apply its force to the pawl 57 and boost engagement of the pawl 57 and the parking wheel 58 when the select lever 11 is shifted to the P position. This engagement of the pawl 57 and the wheel 58 results in locking drive wheels, not shown, for parking a motor vehicle.

As shown in FIG. 1, the control unit 3 is electrically connected to a power supply PS such as a battery, a grounding wire GND, the first position sensor 61, and the second position sensor 62. The control unit 3 receives the first position signal from the first position sensor 61 and the second position signal from the second position sensor 62 so as to compute a relative position, and drives the electric motor 2 based on the relative position under pulse width modulation (PWM) control.

The first position sensor 61 detects an operating angle as a first position, and the second position sensor 62 detects an actuation angle as a second position. The operating angle is an angle of the first connecting member 13 relative to the support plate, corresponding to that of the select lever 11. The actuation angle is an angle of the second connecting member 17, corresponding to that of the manual plate lever 51 of the mode shift unit 500. By subtracting the actuation angle from the operating angle, a relative angle between the first and second connecting members 13 and 17 can be obtained and used for determining a drive command value.

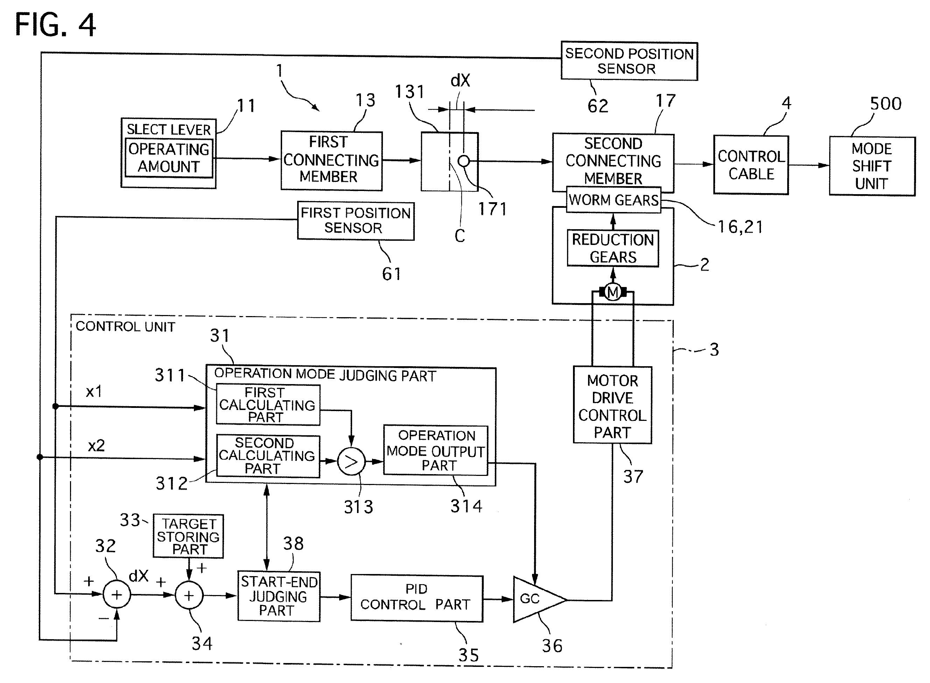

FIG. 4 shows a control block diagram of the control unit 3 and its related units.

The control unit 3 includes an operation mode judging part 31, a first adder 32, a target storing part 33, a second adder 34, a start-end judging part 38, a Proportional-Integral-Derivative (PID) control part 35, a multiplier 36 and a motor drive control part 37.

The operation mode judging part 31 consists of a first calculating part 311, a second calculating part 312, a comparator 313 and an operation mode output part 314.

The first calculating part 311 is electrically connected to the first position sensor 61 to receive a first position signal outputted therefrom, and calculates an operation angle variation by subtracting an operating initial angle from a detected operating angle X1. The operating initial angle will be later described. The operating angle variation corresponds to a first position variation of the present invention.

The second calculating part 311 is electrically connected to the second position sensor 62 to receive a second position signal outputted therefrom, and calculates an actuation angle variation by subtracting an actuation initial angle from a detected actuation angle X2. The actuation initial angle will be later described. The actuation angle variation will be later described.

The comparator 313 is electrically connected to the first calculating part 311 and the second calculating part 312 to compare the operating angle variation and the actuation angle variation, and outputs a comparison signal.

The operation mode output part 314 is electrically connected to the comparator 314 to determine a gain GC according to the comparison signal, and then outputs a gain signal. The gain GC is set to be smaller than a normal gain, for example 0.5 in this embodiment, when the actuation angle variation exceeds the operating angle variation, while it is set to be the normal gain, for example 1 in this embodiment, when the operating angle variation is equal to or more than the actuation angle variation.

The first adder 32 is electrically connected to the first and second sensors 61 and 62 to receive the first and second position signals x1 and x2, and calculates an actual relative angle dX by subtracting the actuation angle x2 from the operating angle x1, then outputting an actual relative angle signal. The actual relative angle dX corresponds to a relative position of the present invention.

The target storing part 33 stores a target relative angle and outputs a target relative angle signal. The target relative angle is set to be zero in this embodiment for example, since the first and second connecting members 13 and 17 are assumed to be adjusted so that the operating angle x1 and the actuation angle x2 are the same value in a stationary state where the select lever 11 is not operated and there in no change in their positions. This stationary state is theoretical, and actually the operating angle x1 and the actuation angle x2 in the stationary state are different from each other. In this case, the target relative angle is set to be an angle difference therebetween in the stationary state in order to obtain a displacement angle variation caused by a select operation by using the target relative angle.

The second adder 34 is electrically connected to the target storing part 33 and the first adder 32 to receive the target relative angle and the detected relative angle dX, and adds them to each other to obtain the displacement angle variation, then outputting an actual displacement angle variation signal.

The start-end judging part 38 is electrically connected to the second adder 34 to receive the displacement angle variation signal, and judges whether the assist control should be started or not and whether the assist control should be ended or not. The start-end judging part 38 is also electrically connected to the operation mode judging part 31 to send and receive information therebetween.

The PID control part 35 is electrically connected to the start-end judging part 38 to receive the actual displacement angle variation signal outputted from the second adder 34, and calculates a command motor drive current determined by using PID control algorithm, then outputting a command motor drive current signal.

The multiplier 36 is electrically connected to the operation mode output part 314 and the PID control part 35 to receive the gain signal and the command motor drive current signal, and multiplies them by each other to obtain a target motor drive current, then outputting a target motor drive current signal. The operating mode judging part 31 and the multiplier 36 act as an assist force suppressing means of the present invention.

The motor drive control part 37 is electrically connected to the multiplier 36 to receive the target motor drive current signal, and outputs a motor drive current determined according to the target motor drive current to the electric motor 2.

The operation of the operating position select device of the first embodiment will be described.

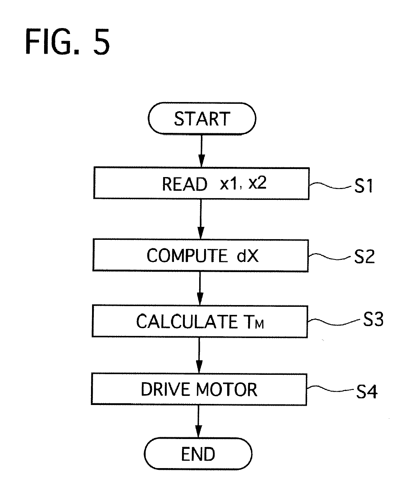

FIG. 5 shows a flowchart of an assist control process executed in the control unit 3 in order to control the electric motor 2 when the select lever 11 is operated by a driver.

At step S1, the first adder 32 receives the operating and actuation angles x1 and x2 respectively outputted from the first and second sensors 61 and 62, to calculate the actual relative angle dX, and then the flow goes to step S2.

At the step S2, the second adder 34 receives the actual relative angle dX outputted from the first adder 32 and the target relative angle outputted from the target storing part 33 to obtain the displacement angle variation, equal to dX in the embodiment, and then the flow goes to step S3.

At the step S3, the PID control part 35 calculates the command motor drive current TM based on the relative displacement angle variation, and then the flow goes to step S4.

At the step S4, the motor drive control part 37 supplies the motor drive current determined based on the command motor drive current TM to the electric motor 2 for driving it to supply assist force, and the flow ends.

The assist force is set allowing for resistance force, reaction force, generated by the detent mechanism 510 and the control cable 4 as follows.

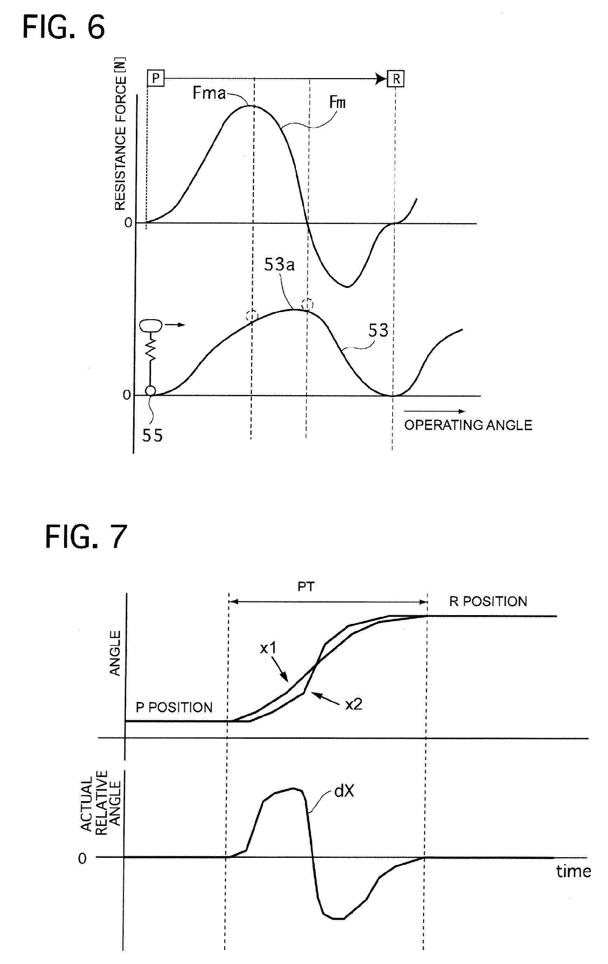

FIG. 6 is a basic target reaction-force table used for determining the assist force in the assist control, and shows characteristic relationships of operating reaction force Fm acting on the select lever 11, and a cam profile of the detent mechanism 510 with respect to the operating angle, respectively, during the select operation from the P position to the R position.

The operating reaction force Fm is calculated in advance by using operating select torque detected by a torque sensor in a case where the motor 15 is not driven in the select operation. The reaction force Fm is generated by resultant force from the sum of friction force caused by the cable 4, inertia force of the motor 2, spring force of the detent mechanism 510, and others.

The reaction force Fm increases in a direction opposite to the operating direction of the lever 11 as a function of the operating angle x1 and reaches its peak Fma before the detent pin 55 reaches the top portion 53a of the cam 530 formed on the detent plate 53, and then decreases with increasing the angle in this pullback zone.

Specifically, in the pull-back zone, the reaction force Fm acts on the lever 11 against the operating force inputted by the driver until the highest position of the cam 530, because the detent plate 53 is biased by the spring force of the spring plate 54 in a direction opposite to the operating direction. The larger the deformation amount of the spring plate 54 becomes in the pull-back zone, the further the lever 11 moves in the operating direction. Note that the operating force in the opposite direction is affected by not only the deformation amount of the spring plate 54, but also the cam profile of the cam 530. The above-described decrease of the resistance force Fm results from a slight slope of the cam 530.

In the pull-back zone, the operating force inputted from the lever 11 needs to overcome the reaction force Fm generated by the spring force of the spring plate 54 and the cam profile, in order to move the lever 11 in the operating direction.

In the highest position where the detent pin 55 is on the peak of the cam 530, the reaction force Fm acting on the lever 11 becomes zero due to its cam profile, although the spring plate 54 is deformed to the maximum degree.

After the detent pin 55 passes over the peak of the top portion 53a, the spring plate 54 starts to reduce its deformation amount until the pin 55 reaches the bottom portion 53b of the cam 530 corresponding to the R position.

In this pull-in zone, the detent plate 53 is pressed by the spring plate 54 in the operating direction, so that the lever 11 is assisted to move forward by the reaction force Fm. Accordingly, the select lever 11 is propelled by the reaction force Fm, increasing at first and then decreasing, in such a way that the lever 11 is pulled into the bottom portion 53b corresponding to the R position.

Therefore, the operating force to be applied from the lever 11 needs to be larger than and overcome the reaction force Fm shown in FIG. 6 in order to manually move the lever 11 for a select operation without the assist force of the motor 2. The assist force is determined based on the reaction force Fm.

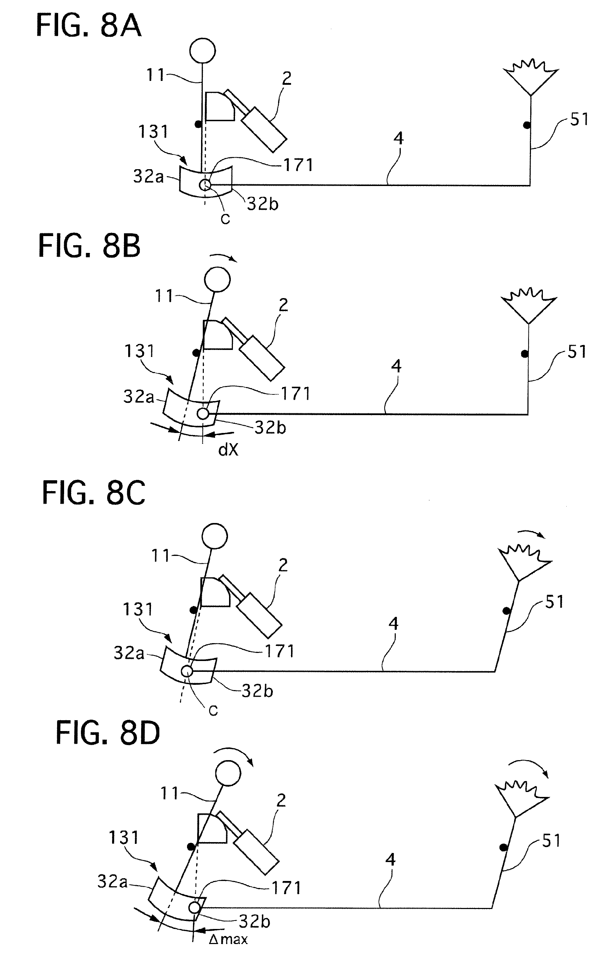

In a stationary state where the select lever 11 is not operated and located in a select position, the projection 171 provided on the second connecting member 17 is located at the middle point C of the play opening 131 formed on the first connecting member 13, being in no contact with the wall portions 13a and 13b of the play opening 131 to divide the play opening 131 by the projection 171 to form a clearance at both adjacent sides of the projection 171 as shown in FIG. 8A.

In order to shift the mode shift unit 500 of the automatic transmission 5, the driver needs to move the select lever 11 in the desired direction indicated by the arrow BP or BL in FIG. 1. This select operation of the select lever 11 causes the first connecting member 13 to be rotated together with the select lever 11, leaving the second connecting member 17 behind, because the select lever 11 and the first connecting member 13 are integrally connected with each other, while the first and second connecting members 13 and 17 are not connected with each other.

At first stage of this operation, the play opening 131 of the first connecting member 13 moves relative to the projection 171 of the second connecting member 17 to change the clearances between the wall portions 13a and 13b of the opening 131 and the projection 171, but they are not in contact with each other as shown in FIG. 8B.

In this stage, a change in the operating angle x1 is detected by the first position sensor 61, while no change in the actuation angle x2 is detected by the second position sensor 62. An actual relative angle dX therebetween is calculated by the first adder 32, and is adjusted by the second adder 34 as a displacement angle variation, which is sent to the start-end judging part 38.

Then, as the relative angle variation becomes larger and exceeds a start threshold, where the projection 171 is still in no contact with the wall portions 31a or 31b of the play opening 131, the assist control starts by the PID control part 35.

The PID control part 35 determines a command motor drive current TM according to the displacement angle variation dX. The command motor drive current is adjusted by the multiplier 36 based on the command motor drive current TM and the gain GC as a target motor drive current, which is sent to the motor drive control part 37 to produce a motor drive current. The motor drive current is supplied to the electric motor 2 so as to apply assist force to the second connecting member 17 through the worm 21 and the worm wheel 16, thereby rotating the manual plate lever 51 via the control cable 4 so that the second connecting member 17 can follow the first connecting member 13 in order to shift the select modes of the transmission 5. This rotation of the second connecting member 17 moves back the projection 171 toward the middle point C.

This means that the PID control part 35 controls the electric motor 2 so that the actual relative angle dX becomes substantially zero, that is, so that the projection 171 is kept located at or near the middle point C. Therefore, the manual plate lever 51 can be moved as if it is directly and mechanically connected with the select lever 11 by the control cable 4.

In the last stage, the second connecting member 17 is advanced by spring force of the detent mechanism 510, the assist control is suppressed, which will be later described in detail.

FIG. 7 shows an example of how the operating angle x1, the actuation angle x2 and actual relative angle dX change when the select lever 11 is moved from the P position to the R position. Note that the actual relative angle dx is illustrated in enlargement relative to the operating angle and the actuation angle.

When the select lever 11 is not operated as shown in FIG. 8A, the operating angle x1 and the actuation angle x2 have substantially the same value, and the actual relative angle dX is zero.

When the select lever I 1 is moved from the P position to the R position, as shown in FIG. 8B, at normal operating speed on a flat road, the operating angle x1 immediately changes according to the movement of the select lever 11.

At first, as shown in the upper part of FIG. 7, the actuation angle x2 increases by assist force generated by the electric motor 2 under the assist control started after the displacement angle variation dX exceeds the start threshold. The actuation angle x2 follows the operating angle x1 because of the resistance force applied to the second connecting member 17 via the control cable 4 in the pull-back zone of the detent mechanism 510, with the projection 171 and the wall portions 13a and 13b being in no contact with each other. Therefore, the actual relative angle dX in this state becomes positive as shown in the lower part of FIG. 7.

In the pull-in zone after the detent pin 55 passes the top portion 53a of the detent plate 53, it is pressed by the spring plate 54 in the operating direction to generate advance force due to a slope of the detent plate 53 and the spring plate 54. Consequently, the second connecting member 17 is rotated to overtake the first connecting member 13 being moved by the driver via the select lever 11, and accordingly the actuation angle x2 goes ahead of the operating angle x1 as shown in the upper part of FIG. 7. The actual relative angle dX becomes negative as shown in the lower part of FIG. 7.

When the select operation is ended, the operating angle x1 and the actuation angle x2 have the same value higher than the value at the P position, thereby the actual relative angle dX is substantially zero, where the projection 171 is located at the middle point C as shown in FIG. 8C.

As described above, the manual plate lever 51 and the second connecting lever 17 is assisted with the assist force by the electric motor 2, keeping a state where the projection 171 and the wall portions 13a and 13b of the play opening 131 are in no contact with each other. No contact therewith in the select operation removes a connecting shock between the first and second connecting members 13 and 17, providing a good select-operation feeling.

The select-operation feeling in this embodiment depends mainly on the checking force caused by the checking mechanism 14, and the checking force is changeably set by selecting characteristics of the checking mechanism 14, such as spring force of the not-shown spring and/or configurations of the check plate 142 and the check pin 141. Therefore, the checking force can be set to be light to decrease the operating force of the driver, thereby providing a good select-operation feeling.

Incidentally, when the select lever 11 is moved from the P position to the D position to start the vehicle on a slope, the parking wheel 58 is urged strongly to tightly engage with the parking pawl 56, because slope component force of weight of the vehicle acts on the parking wheel 58 to generate engaging force larger than that generated on a flat road. In order to release the parking pawl 56 from the parking wheel 58 in this state, stronger assist force is needed.

In this case, the wall portion 13b of the play opening 131 contacts the projection 171 as shown in FIG. 8D when the select lever 11 is moved in the direction indicated by the arrow BL, providing a maximum actual relative angle Δmax. Therefore, the PID control part 35 controls the electric motor 2 to supply larger assist torque to the second connecting member 17. In addition, the second connecting member 17 is applied with the operating force directly supplied from the driver via the first and second connecting members 13 and 17 and the control cable 4 because of the contact of the wall portion 13b and the projection 171. This enables the select lever 11 to be operated by a small operating force, and allows the electric motor 2 to be set to have a small rating and small dimensions by the operating force added.

When the select lever 11 is operated at rapid speed, the projection 171 contacts with the wall portion 13a or 13b of the play opening 131, which directly supplies the operating force supplied from the driver to the manual plate lever 51 through the first and second connecting members 13 and 17 and the control cable 4. In addition to the operating force, large assist force is also supplied to the manual plate lever 51 by the electric motor according to the maximum actual relative angle Δmax. This allows its necessary response to be slower, enabling the electric motor 2 to be set to have a small rating and small dimensions.

When the select device electrically fails, moving the select lever 11 causes the projection 171 and the wall portion 13a or 13b to be contacted with each other, moving the first and second connecting members 13 and 17 together to unfailingly shift the operation modes of the transmission 5.

In the operating position select device 1 of the first embodiment, the assist control is set to start when the actual relative angle dX exceeds the start threshold and end when the actual relative angle dX is kept less than an end threshold for more than a predetermined period.

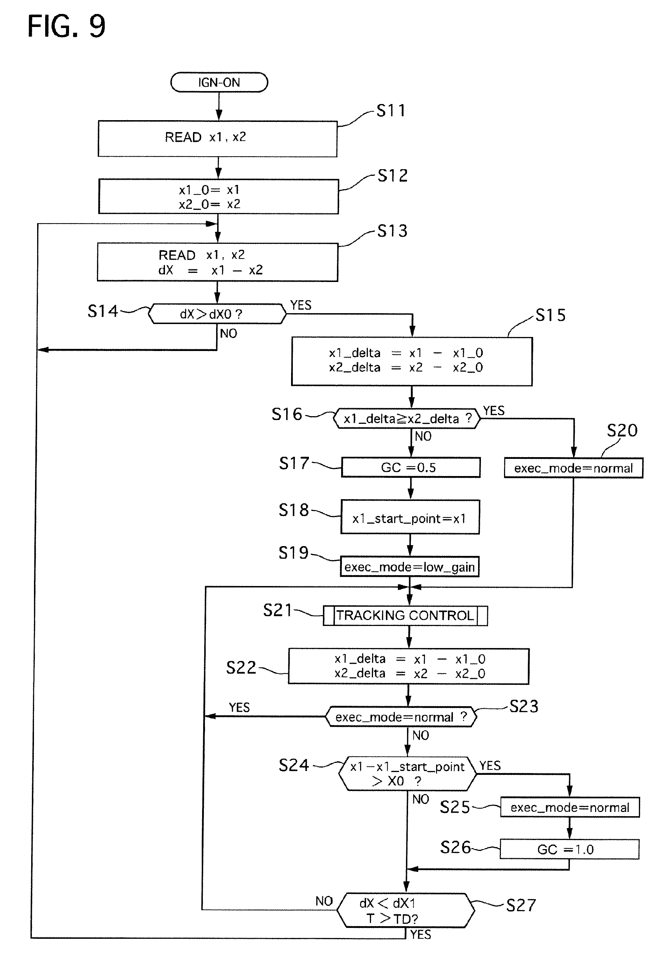

In order to carry out the assist control described above, the control unit 3 executes it according to a flow chart, shown in FIG. 9, of the assist control process and an operation mode judging process.

At step S11, immediately after ignition-on of an engine, the first calculating part 311 and the second calculating part 312 read an operating angle x1 and an actuation angle x2 in the P position, respectively, and then the flow goes to step S2.

At the step S12, the first calculating part 311 and the second calculating part 312 store the operating angle x1 and the actuation angle x2 detected in the step S11 as an initial operating angle x1_0 and an initial actuation angle x2_0, and then the flow goes the step S 13. Incidentally, this initialization is performed at the P position immediately after the ignition-on, because the actuation angle x2 is stably fixed at its proper value under that condition. Note that the actuation angle x2 is a little changeable under other conditions, such as soon after the select operation is ended. At this step, the operation mode judging part 31 may be constructed to calculate an actual displacement angle dX and judge based thereon whether the initialization is possible or not. For example, when the actual displacement angle dX is within a predetermined value, the initialization is judged to be possible, while when it is out of the predetermined value, the initialization is forbidden.

At the step S13, the first adder 32 receives the operating angle x1 and the actuation angle x2 to calculate the actual displacement angle dX by subtracting the actuation angle x2 from the operating angle x1, and then the flow goes to step S14.

At the step S14, the start-end judging part 38 receives a displacement angle variation, which is equal to the actual displacement angle dX in this first embodiment since the target relative angle is zero, from the second adder 34 to judge whether the displacement angle variation, equal to dX, is larger than the start threshold dX0. If YES, the flow goes to step S 15 to start the assist control, while, if NO, the flow returns to the step S 13.

At the step S 15, the first calculating part 311 calculates an operating angle variation x1_delta by subtracting the operating initial angle x1_0 from the operating angle x1, and the second calculating part 312 calculates an actuation variation x2_delta by subtracting the actuation initial angle x2_0 from the actuation angle x2, and then the flow goes to step S16.

At the step S16, the comparator 313 compares the operating angle variation x1_delta and the actuation variation x2_delta. If the former is equal to or larger than the latter, the flow goes to step S20 to supply the assist force determined in a normal start mode, while if the former is smaller than the latter, the flow goes to step S 17 to supply the assist force determined in an intermediate position start mode.

At the step S17, the operating mode output part 31 sets the gain GC to be 0.5 smaller than that in the normal start mode where the gain GC is 1.0 to output it to the multiplier 36, and then the flow goes to step S 18.

At the step S18, the first calculating part 311 stores a current operating angle x1 detected before the assist control starts as an operation start angle x1_start_point, and then the flow goes to step S19.

At the step S 19, the operating mode output part 314 sets and stores mode information exec_mode to be "low_gain", and then the flow goes to step S21.

At the step S20, the operating mode output part 314 sets and stores mode information exec_mode to be "normal" to output the normal gain GC, which is set to be 1.0, to the multiplier 36, and the flow goes to step S21.

At the step S21, the assist control is executed by the PID control part 35, the multiplier 36 and the motor drive control part 37 according to the steps 1 to 4 in FIG. 5 so that the displacement angle variation becomes zero, and the flow goes to step S22.

At the step S22, the first and second calculating parts 311 and 312 calculate a new operating angle variation x1_delta and a new actuation angle variation x2_delta, and then the flow goes to the step S23.

At the step S23, the operating mode output part 314 judges whether the mode information exec_mode is "normal" or not. If YES, the flow goes to the step S21 to supply the assist force in the normal start mode, while if NO, the flow goes to step S24.

At the step S24, the start-end judging part 38 calculates an angle difference between a current operating angle x1 and the operation start angle x1_start_point to judge whether the angle difference is larger than a predetermined value X0 or not. If YES, the flow goes to step S25, while if NO, the flow goes to step S27.

At the step S25, the operation mode output part 314 sets the mode information exec_mode to be "normal", and then the flow goes to step S26.

At the step S26, the operation mode part 314 sets the gain to be 1.0 to output it to the multiplier 36, and then the flow goes to the step S27.

At the step S27, the start-end operation judging part 38 receives the displacement angle variation equal to dX to judge whether an end condition of the assist control is met or not. The end condition is set so that the displacement angle variation is kept smaller than an end judgment value dX1 for more than a predetermined period TD, where a period where dX < dX1 is indicated by "T" in the flow chart of FIG. 9. If YES, the flow returns to the step S 13, while if NO, the flow returns to the step S21.

As described above, the operating position select device 1 of the first embodiment starts the assist control when the displacement angle variation dX exceeds the start threshold dX0, and controls the electric motor 2 by using the PID control algorithm so that the displacement angle variation dX becomes substantially zero. Then, it finishes the assist control when the displacement angle variation dX is kept at or near zero for more than the predetermined period TD.

In the assist control, the check pin 141 and the detent pin 55 moves in the operating direction, as respectively indicated by the arrows A1 and A2 in this case, under the assist control where the assist force is determined based on the actual angle variation dX as shown in FIG. 10A. At the end of the assist control, the check pin 141 and the detent pin 55 are located in the bottom portions.

On the other hand, after assist-control ends, the check pin 141 happens to be substantially held between the bottom portion 142a and its adjacent top portion due to static friction force because the select lever 11 is not moving, or, because at the end of the select operation as shown in FIG. 10B, the detent pin 55, which is located between the bottom portion and the top portion, is urged to move back toward the bottom portion 53b in the direction opposite to the operating direction because of the slope of the detent plate 53 and the spring plate 54.

This generates change of the actual relative angle dX, and if it exceeds the start threshold dX0, the assist control is started. This assist control is executed in the intermediate position start mode according to the steps 16 to 17 in FIG. 9 when the actuation variation x2_delta is larger than the operating angle variation x1_delta.

In this intermediate position start mode, the gain GC is changed to 0.5 from the normal gain 1.0, thereby suppressing the command motor drive current. This decreases vibrations caused by hunting between the start and the end of the assist control.

After then, when the select lever 11 is moved by the vibration and others and the operating angle x1 becomes larger than the predetermined value X0 in the step S24, the assist control is changed from the intermediate position start mode to the normal start mode.

Thus, in the operating position select device 1 of the embodiment, the vibration due to the hunting between the start and the end of the assist control can be suppressed because of changing the gain GC without stopping the assist control and without heavy select operation force when the select lever 11 is moved in a next select operation. The vibration is substantially removed or very small so that the driver can hardly feel it.

The advantages of the operating position select device 1 of the embodiment will be described.

The select device 1 has the electric motor 2 controlled based on the actual relative angle dX between the operating angle x1 and the actuation angle x2, which can decrease driver's operating force to provide a good select operation feeling. In addition, the select lever 11 can be shorter than a conventional one by approximately 150 mm at its portion projecting from a center console toward a passenger compartment without increasing an operating force applied to the select lever 11 so much. This brings a design freedom concerning an installation location of the select lever and/or a layout of a passenger compartment to be broadened.

In the normal select operation at normal select-speed and on a substantially flat road, the first and second connecting members 13 and 17 do not contact with each other, and the second connecting member 17 is driven to follow the first connecting member 13, which enables the driver to move the select lever 11 with a light force and have a comfortable operating feeling. This can remove contact shock caused by contact between the projection 171 and the wall portion 31a or 13b of the play opening 131, and friction resistance force caused at the control cable 4. Accordingly, the select feeling is adjustable by changing the characteristics of the checking mechanism 14.

The projection 171 and wall portions 31 a and 31b have clearances therebetween, which can simplify adjustment for synchronization between the select lever 11 side and the mode shift unit 500 side, improving its assembling process.

On the other hand, in a different select operation, such as at high select-speed or on a slope, the wall portion 13a or 13b and the projection 171 contact with each other to directly transmit the operating force from the select lever 11 to the mode shift unit 500 in addition to assist force outputted from the electric motor 2. This enables the electric motor 2 to be of small size and employ a lower ranking one.

A rate of the assist force and the operating force can be easily changed by changing the output power of the electric motor 2. Accordingly, for example, when the select lever 12 is operated from the R position to the P position at high vehicle speed, the driver can be alerted by a suppression of the assist force making the operating force heavier.

When the operating position select device 1 fails electrically, a driver can shift the mode shift unit 500 by operating the select lever 11, because the wall portion 13a or 13b and the projection 171 contact with each other, and thereby the select lever 11 and the mode shift unit 500 are mechanically connected to transmit the operating force from the select lever 11 to the mode shift unit 500. Therefore, the mode shift unit 500 can be driven to shift the modes of the automatic transmission 5 directly by the driver's operating through the first and second connecting members 13 and 17 and the control cable 4, although its operating force becomes larger than that in a normal state.

This select device 1 has high robustness, because the projection 171 can easily move relative to the wall portions 13a and 13b of the play opening 131 when setting errors, manufacturing errors or age change occurs.

When the assist control starts due to the actuation angle variation, the gain GC is set lower than that in the normal start mode, which decreases the vibration caused by the hunting between the start and the end of the assist control, decreasing caloric power of the electric motor 2. In addition, the over-assist control can be suppressed in an abnormal case of the second position sensor 62.

The operation mode judging part 31 shifts the mode information from the intermediate position start mode to the normal start mode when the operating angle x1 changes after the intermediate position start mode is selected. This can provide the good select operation feeling by avoiding the contact between the projection 171 and the wall portions 31a and 31b.

Next, an operating position select device of a second embodiment according to the present invention will be described with reference to the accompanying drawing.

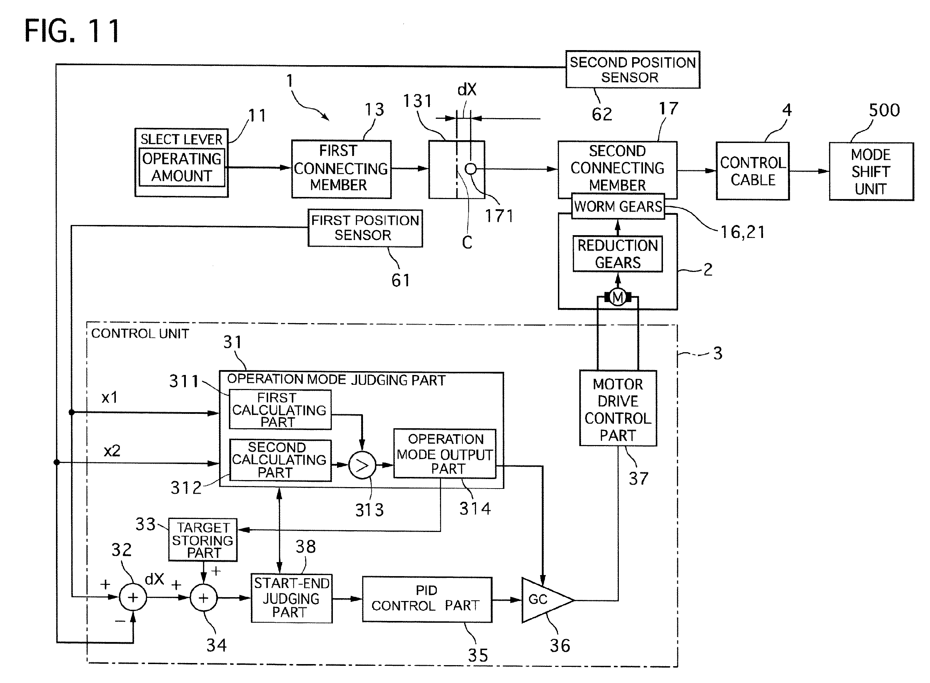

The operating position select device 1 is constructed similarly to that of the first embodiment shown in FIGS. 1 to 4, except that an operation mode output part 314 of an operation mode judging part 31 is also electrically connected to a target storing part 33 as shown in FIG. 11. The other parts of the second embodiment are similar to those of the first embodiment. The operating mode judging part 31 and a target storing part 33 act as an assist force suppressing means of the present invention.

When the operating mode output part 314 sets mode information to be an intermediate position start mode, it outputs an adjustment signal to the target storing part 33 so that it sets a target relative angle to be larger than zero. This decreases a displacement angle variation dX to be sent to a PID control part 35, which sets a command motor drive current TM smaller than that in the normal start mode.

Accordingly, this select device of the second embodiment has advantages similar to those of the first embodiment. The device of the second embodiment can suppress vibration due to hunting between a start and an end of the assist control by setting the target relative angle more than zero and within a permissible range instead of changing the gain GC in the first embodiment, without stopping the assist control and without heavy select operation force when the select lever 11 is moved in a next select operation.

Next, an operating position select device of a third embodiment according to the present invention will be described with reference to the accompanying drawing.

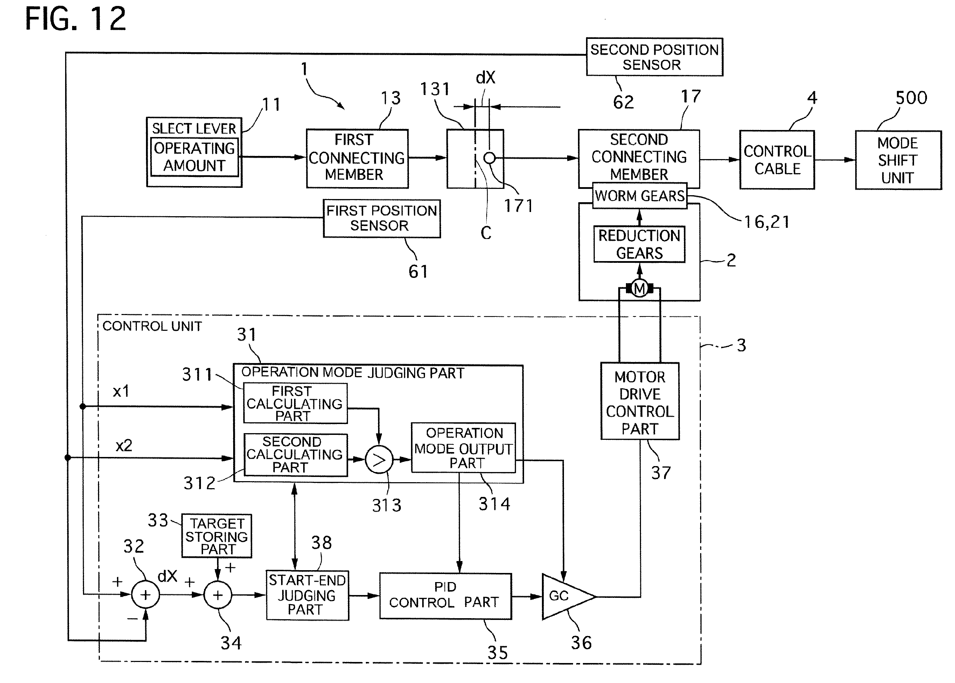

The operating position select device 1 is constructed similarly to that of the first embodiment shown in FIGS. 1 to 4, except that an operation mode output part 314 of an operation mode judging part 31 is also electrically connected to a PID control part 35 as shown in FIG. 12. The other parts of the third embodiment are similar to those of the first embodiment. The operating mode judging part 31 and the PID control part 35 act as an assist force suppressing means of the present invention.

When the operating mode output part 314 sets mode information to be an intermediate position start mode, it outputs an adjustment signal to the PID control part 35 so that it sets a command motor drive current TM to be smaller than that in the normal start mode.

Accordingly, this select device of the third embodiment has advantages similar to those of the first embodiment. The device of the third embodiment can suppress vibration due to hunting between a start and an end of the assist control by setting the command motor drive current TM to be smaller than that in the normal start mode, instead of changing the gain GC in the first embodiment, without stopping the assist control and without heavy select operation force when the select lever 11 is moved in a next select operation.

Incidentally, the operating position select device may employ a device different from that of the first embodiment as follow.

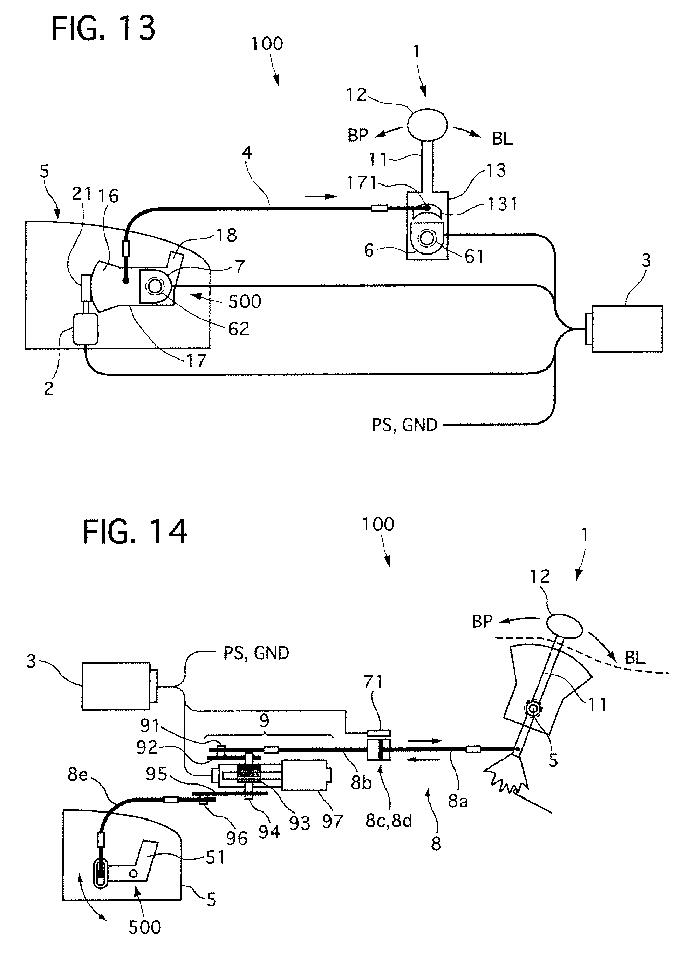

An operating position select device of a fourth embodiment according to the present invention will be described with reference to the accompanying drawing of FIG. 13.

In this select device of the fourth embodiment, an electric motor 2 and a second connecting member 17 are mounted on an automatic transmission 5.

Referring to FIG. 13, this operating position select device is constructed similarly to that of the first embodiment shown in FIGS. 1 to 4 except for the following elements.

A first connecting member 13 is integrally joined with a select lever 11 of a select lever unit 100 and provided with a play opening 131.

A second connecting member 17 is mounted on the automatic transmission 5 and has a worm wheel portion 16 in mesh with a worm 21 connected on an output shaft of an electric motor 2 mounted on the automatic transmission 5. This member 17 is integrally formed with a manual plate member 18 at its end portion.

A control cable 4 has a projection 171 inserted into the play opening 131 with clearances therebetween at its one end portion and is connected with the second connecting member 17 at its other end portion.

The other parts of the operating position select device of the sixth embodiment are similar to those of the first to fifth embodiments.

The operation and advantages of the select device 1 of the sixth embodiment are similar to those of the first to fifth embodiments. Further, the select lever unit 100 can be smaller than those of the embodiments, since the second connecting member 17 and the motor 2 are mounted on the automatic transmission 5.

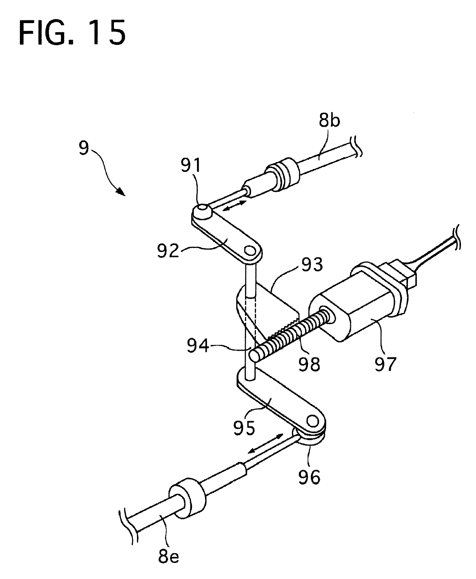

Next, an operating position select device of a fifth embodiment according to the present invention will be described with reference to the accompanying drawings of FIG. 14 and 15.

In this select device 1 of the fifth embodiment, the relative displacement is detected by a length, not by an angle in the fourth embodiment, and at a position between a first control cable 8a and a second control cable 8b which connect a select lever 11 with an assist actuator 9.

Referring to FIG. 14 of the drawing, there is shown an automatic transmission 5 and an operating position select device 1 to control the transmission 5.

The operating position select device 1 includes a select lever unit 100 with a select lever 11 manually operated by a driver, a mode shift unit 500 mounted on the automatic transmission 5, a first control cables 8a, a second control cable 8b, and a third control cable 8e for transmitting operating force from the select lever 11 to the mode shift unit 500, the assist actuator 9, and a control unit 3 for controlling the assist actuator 9.

The select lever unit 100 is arranged, for example, at a center console 3 beside a driver's seat and has the select lever 11 operated by the driver and a checking mechanism 14 for ensuring the select lever 11 to be kept in a selected mode position.

Referring to FIGS. 14 and 15, the assist actuator 9 includes an electric motor 97 with reduction gears for reducing rotation speed of its output shaft, a worm 98 formed on the output shaft, and a worm wheel 93 meshing with the worm 98 and integrally united to a coupling shaft 94. The coupling shaft 94 is integrally provided with the worm wheel 93 at its intermediate portion, a first plate 92 at its top end portion, and a second plate 95 at its bottom end portion.

The first control cable 8a is connected with a bottom portion of the select lever at its one end portion and a piston 8c at its other end portion. The second control cable 8b is connected with a cylinder 8d at its one end portion and the first plate 92 by a first pin 91 at its other end portion. The piston 8c is disposed slidably in the cylinder 8d to have clearances between wall portions of the cylinder 8d, so that the first control cable 8a can move relative to the second control cable 8b in a permissible range, where the piston 8c is not in contact with the wall portions of the cylinder 8d. The first and second control cables 8a and 8b moves together with each other to transmit operating force therebetween when the piston 8c is in contact with the wall portion of the cylinder 8d. The third control cable 8e is connected with the second plate 95 by a second pin 96 at its one end portion and a manual plate lever 51 at its other end portion.

There is provided a relative displacement sensor 71 for detecting a relative displacement between the piston 8c and a middle point of the inside of the cylinder 8d.

The operation and advantages of the select device 1 of the seventh embodiment are similar to those of the first to fifth embodiments. Further, the select lever unit 100 can be smaller than those of the embodiments, since the second connecting member 17 and the motor 2 are disposed between the select lever unit 100 and the automatic transmission 5.

While there have been particularly shown and described with reference to preferred embodiments thereof, it will be understood that various modifications may be made therein.

The select lever 11 may be in a shape different from the above embodiments, and have a configuration different from that of the first embodiment shown in FIGS. 1 and 2.

The profile of the cam 530 of the detent mechanism 510 may be formed arbitrarily to have different target reaction force.

The position sensing means of the present invention may employ, instead of the first position sensor 61 and the second position sensor 62 of the embodiments, one group of three following groups; a first group containing an operating angle sensor and a relative angle sensor which detects a relative angle between an operating angle and an actuation angle, and a second group containing an actuation angle sensor and the relative angle sensor which detects the relative angle between the operating angle and the actuation sensor. The position sensing means are constructed to sense at least two of an operating angle, an actuation angle, and a relative angle sensor between the operating angle and the actuation angle, and accordingly the control unit 3 can obtain all of the operating angle, the actuation angle, and the relative angle by using the position sensing means.

An elastic member may be arranged in each clearance of the play opening 131.

## Claims

1. An operating position select device (100) adapted for an automatic transmission (5) whose operation modes are shiftable, the operating position select device (100) comprising:
a select lever unit (1) having a select lever (11) that is operated by a driver between a plurality of select positions corresponding to the operation modes;
a first connecting member (13) mechanically connected with and movable together with the select lever (11);
a mode shift unit (500) mounted on the automatic transmission (5) for shifting operation modes of the automatic transmission (5);
a second connecting member (17) mechanically connected with the mode shift unit (500) for shifting positions thereof, the second connecting member (17) being provided with a relative movable mechanism (171, 131, 32a, 32b; 8c, 8d) which allows the first connecting member (13) to move relative to the second connecting member (17) in non-contact therewith within a limit amount and restrain the second connecting member (17) to move together with the first connecting member (13) when the first and second connecting members (13, 17) contact with each other after a relative movement thereof;
position sensing means (61, 62) sensing at least two positions among an operating position (x1) of the first connecting member (13), an actuation position (x2) of the second connecting member (17), and a relative position (dX) between the operating position (x1) and the actuation position (x2);
an assist actuator (2; 97) for supplying assist force to the second connecting member (17); and
a control unit (3) for controlling motor drive current to be applied to the assist actuator (2; 97) based on the relative position (dX) to vary the assist force, the control unit (3) having assist force suppressing means (31, 36; 31, 33; 31, 35) for suppressing the assist force when an assist control of the assist actuator (2; 97) is started based on a relative position variation due to a variation of the actuation position (x2).

2. The operating position select device (100) according to claim 1, wherein
the control unit (3) shifts the assist control from the intermediate position start mode to the normal start mode when the operating position changes to cause the start of the assist control in the intermediate position start mode.

3. The operating position select device (100) according to claim 1, wherein
the assist force suppressing means (31, 36; 31, 33; 31, 35) suppresses the assist force by shifting a gain (GC) in an intermediate position start mode to be smaller than a gain (GC) in a normal start mode used in a start of the assist control based on the relative position variation due to a variation of the operating position (x1).

4. The operating position select device (100) according to claim 1, wherein
the assist force suppressing means (31, 36; 31, 33; 31, 35) suppresses the assist force by decreasing the relative position (dX).

5. The operating position select device (100) according to claim 1, wherein
the assist force suppressing means (31, 36; 31, 35; 31, 33) suppresses the assist force by changing a command motor drive current signal obtained based on the relative position (dX) and determining the motor drive current.

6. The operating position select device (100) according to any one of claims 3 to 5, wherein
the control unit (3) shifts the assist control from the intermediate position start mode to the normal start mode when the operating position (x1) changes to cause the start of the assist control in the intermediate position start mode.
